# EUROPÄISCHE PATENTSCHRIFT

(11) **EP 4 639 101 B1**
(45) Veröffentlichungstag und Bekanntmachung des Hinweises auf die Patenterteilung: **19.08.2026**
(21) Anmeldenummer: 23833484.1
(22) Anmeldetag: 20.12.2023
(51) Int. Cl.: G01F 1/60

(54) **VORRICHTUNG ZUM BEREITSTELLEN EINES ERREGUNGSSTROMS AN EINEM MAGNETISCH-INDUKTIVEN DURCHFLUSSMESSGERÄT UND MAGNETISCH-INDUKTIVES DURCHFLUSSMESSGERÄT**
DEVICE FOR PROVIDING AN EXCITATION CURRENT AT A MAGNETIC-INDUCTIVE FLOWMETER, AND MAGNETIC-INDUCTIVE FLOWMETER
DISPOSITIF POUR FOURNIR UN COURANT D'EXCITATION AU NIVEAU D'UN DÉBITMÈTRE MAGNÉTO-INDUCTIF, ET DÉBITMÈTRE MAGNÉTO-INDUCTIF

(30) Priorität: 21.12.2022 DE 102022134361
(43) Veröffentlichungstag der Anmeldung: 29.10.2025
(73) Patentinhaber: Endress+Hauser Flowtec AG, 4153 Reinach (CH)
(72) Erfinder: SÜTTERLIN, Dirk, 79650 Schopfheim (DE); SPAHLINGER, Andre, 79415 Bad Bellingen (DE); RÜFENACHT, Markus, 4442 Diepflingen (CH)
(74) Vertreter: Endress + Hauser Group Services (Deutschland) AG+Co. KG
(86) Internationale Anmeldenummer: PCT/EP2023/086845
(87) Internationale Veröffentlichungsnummer: WO 2024/133392

(56) Entgegenhaltungen:
- EP-B1- 0 414 773
- CN-A- 104 266 700
- DE-B4- 102016 122 914
- US-A- 4 410 926
- US-A1- 2018 128 665

## Beschreibung

Die Erfindung betrifft ein Vorrichtung zum Bereitstellen eines Erregungsstroms an einem magnetisch-induktiven Durchflussmessgerät und ein magnetisch-induktives Durchflussmessgerät.

Magnetisch-induktive Durchflussmessvorrichtungen werden zur Bestimmung der Durchflussgeschwindigkeit und des Volumendurchflusses eines fließenden Mediums in einer Rohrleitung eingesetzt. Dabei werden inline magnetisch-induktive Durchflussmessgeräte von magnetisch-induktiven Durchflussmesssonden unterschieden, die in eine seitliche Öffnung einer Rohrleitung eingesetzt werden. Ein magnetisch-induktives Durchflussmessgerät weist eine magnetfelderzeugende Vorrichtung zum Erzeugen eines Magnetfeldes auf. Eine Hauptachse des Magnetfeldes verläuft dabei im Wesentlichen senkrecht zur Flussrichtung des fließenden Mediums. Dafür werden üblicherweise Sattel- oder Zylinderspulen verwendet. Um ein überwiegend homogenes Magnetfeld zu realisieren, werden zusätzlich Polschuhe so geformt und relativ zur Strömungsrichtung angebracht, dass die Magnetfeldlinien über den gesamten Rohrquerschnitt im Wesentlichen senkrecht zur Querachse bzw. parallel zur Vertikalachse des Messrohres verlaufen. Zudem weist ein magnetisch-induktives Durchflussmessgerät ein Messrohr zum Führen des Mediums auf, auf dessen äußeren Mantelfläche die magnetfelderzeugende Vorrichtung angeordnet ist. Ein an die Mantelfläche des Messrohres angebrachtes Messelektrodenpaar greift eine senkrecht zur Flussrichtung und zum Magnetfeld anliegende elektrische Messspannung bzw. Potenzialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der gemessenen induzierten Messspannung die Durchflussgeschwindigkeit und/oder - mit Hinzunahme eines bekannten Rohrquerschnitts - der Volumendurchfluss ermittelt werden.

Im Gegensatz zu einem magnetisch-induktiven Durchflussmessgerät, welches ein Messrohr zum Führen des Mediums mit angebrachter Vorrichtung zum Erzeugen eines das Messrohr durchdringenden Magnetfeldes und Messelektroden umfasst, werden magnetisch-induktive Durchflussmesssonden mit ihrem üblicherweise kreiszylindrischen Gehäuse in eine seitliche Öffnung einer Rohrleitung eingeführt und fluiddicht fixiert. Ein spezielles Messrohr ist nicht mehr notwendig. Die eingangs erwähnte Messelektrodenanordnung und Spulenanordnung auf der Mantelfläche des Messrohrs entfällt, und wird durch ein im Inneren des Gehäuses und in unmittelbarer Nähe zu den Messelektroden angeordnete Vorrichtung zur Erzeugung eines Magnetfeldes ersetzt, welche so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an unterschiedlichen magnetisch-induktiven Durchflussmesssonden.

Magnetisch-induktive Durchflussmessvorrichtungen finden vielfach Anwendung in der Prozess- und Automatisierungstechnik für Fluide ab einer elektrischen Leitfähigkeit von etwa 5 µS/cm. Entsprechende Durchflussmessvorrichtungen werden von der Anmelderin in unterschiedlichsten Ausführungsformen für verschiedene Anwendungsbereiche beispielsweise unter der Bezeichnung PROMAG oder MAGPHANT vertrieben.

Die US 2018/0128665 A1 offenbart eine Anregungsschaltung für ein elektromagnetisches Durchflussmessgerät, bei der mehrere Schalter und eine intelligente Steuerlogik eingesetzt werden, um einen präzisen Erregerstrom bereitzustellen. Die Schaltung nutzt einen ersten Schalter für eine niedrigere Gleichspannung und einen zweiten Schalter für eine höhere Gleichspannung, um den Erregerstrom abhängig von Zielwerten dynamisch nachzuregeln. Zusätzlich dienen weitere Schalter (dritter bis sechster) zur Polungsumkehr der Spannung auf der dritten Signalleitung, sodass die Richtung des Erregerstroms gezielt geändert werden kann. Eine Steuerschaltung schaltet die beteiligten Schalter mit unterschiedlichen Zeitintervallen, damit der Erregerstrom sowohl stabil gehalten als auch bei Bedarf schnell erhöht werden kann, wodurch die Gesamtanregung effizienter und reaktionsschneller wird.

DE 10 2016 122 914 B4 offenbart eine Vorrichtung zum Bereitstellen eines Erregerstroms an einem magnetisch-induktiven Durchflussmessgerät. Dabei weist die Vorrichtung eine H-Brücken-Steuerschaltung, die dafür ausgebildet ist, Steuersignale an jeweilige Eingänge des ersten, zweiten, dritten und vierten Transistors einer H-Brücke zu liefern, um die Lieferung eines spezifizierten Stroms an die Erregerspule durch die H-Brücke zu steuern. Ein induktiver On-Chip-Transformator zum elektrischen Isolieren und induktiven Koppeln eines empfangenen Eingangssignals an die H-Brücke ist weiterhin vorgesehen, um wenigstens einen von dem ersten, zweiten, dritten und vierten Transistor der H-Brücke zu steuern. Weiterhin weist die Vorrichtung eine Hochfrequenz-Interferenz(Radio-Frequency Interference, RFI)-Dämpfungsschaltung in einem Signalweg zwischen der Differenzverstärkerschaltung und dem Analog-Digital-Wandler auf. Weiterhin weist die Vorrichtung getrimmte Widerstände auf, die dazu ausgebildet sind, jeweilige Verstärkungen eines Operationsverstärker einzustellen und einen DC-gekoppelten differenziellen Signalweg durch den Differenzverstärker bereitzustellen. Eine an den Analog-Digital-Wandler gekoppelte Digitalsignalprozessor-Schaltung ist weiterhin vorgesehen, um digitale Signal zu empfangen, welche Informationen des elektromagnetischen Flusssensors enthält. Um diese aufzubereiten, weist die Digitalsignalprozessor-Schaltung eine digitale FIR (Finite Impulse Response, Finite Impulsantwort)-Bandpassfilterschaltung auf.

Der Erfindung liegt die Aufgabe zugrunde die aktuellen Lösungen weiterzuentwickeln.

Die Aufgabe wird gelöst durch die Vorrichtung nach Anspruch 1 und das magnetisch-induktive Durchflussmessgerät nach Anspruch 15.

Die erfindungsgemäße Vorrichtung zum Bereitstellen eines Erregungsstroms an einem magnetisch-induktiven Durchflussmessgerät zum Ermitteln einer strömungsgeschwindigkeitsabhängigen Messgröße eines fließfähigen Mediums, mit einem Messrohr, einer magnetfelderzeugenden Vorrichtung und einer Vorrichtung zum Erfassen einer induzierten Messspannung im Medium, umfassend:
- einen integrierten Schaltkreis , umfassend:
   -- eine H-Brücke mit einem ersten, zweiten, dritten und vierten Transistor,
      **wobei** die H-Brücke über einen ersten Knotenpunkt mit einem Eingang und über einen zweiten Knotenpunkt mit einem Ausgang der magnetfelderzeugenden Vorrichtung verbunden ist,
   -- eine Ansteuerlogik, welche dazu eingerichtet ist, Steuersignale an jeweilige Eingänge des ersten, zweiten, dritten und vierten Transistors der H-Brücke zu liefern, um die Bereitstellung eines Betriebssignales an die magnetfelderzeugende Vorrichtung durch die H-Brücke zu steuern,
   -- einen fünften Transistor, welcher mit einem Eingang für eine Hold-Spannung Vhold, und insbesondere mit einem Abwärtswandler, welcher ebenfalls Teil des integrierten Schaltkreises ist und dazu eingerichtet ist, eine Eingangsspannung in die Hold-Spannung Vhold umzuwandeln, elektrisch verbunden ist,
      **wobei** die Ansteuerlogik dazu eingerichtet ist, Steuersignale an den Eingang des fünften Transistors zu liefern, um eine Hold-Dauer Thold der Hold-Spannung Vhold und eine Frequenz mit der sich die Hold-Spannung Vhold wiederholt einzustellen; und
- einen Mikrocontroller, welcher dazu eingerichtet ist, das Betriebssignal an den integrierten Schaltkreis zu liefern und Messsignale von dem integrierten Schaltkreis zu erhalten,
   **wobei** der Mikrocontroller von dem integrierten Schaltkreis getrennt angeordnet ist.

Die Integration der H-Brücke, der Ansteuerlogik und des fünften Transistors in den integrierten Schaltkreis hat zum Vorteil, dass somit weniger Platz auf der Leiterplatte der Vorrichtung zum Bereitstellen des Erregungsstroms dafür benötigt wird. Auf der Leiterplatte sind alle elektronischen Bauteile der Vorrichtung zum Bereitstellen des Erregungsstroms für die magnetfelderzeugende Vorrichtung angeordnet.

Weiterhin vorteilhaft an der Integration ist die damit verbundene vereinfachte Einkaufssituation. Es müssen nicht mehr einzelne elektronische Bauteile, welche die H-Brücke und die Ansteuerlogik bilden erworben und auf der Leiterplatte verschaltete werden, sondern es reicht einen einzelnen Chip für jedes magnetisch-induktive Durchflussmessgerät vorzusehen.

Der Hauptvorteil jedoch ist, dass durch die Integration die zeitkritischen Funktionen zur Verhinderung von Kurzschlüssen nicht mehr über die Software gesteuert werden müssen, sondern nun über die Hardware, d.h. des integrierten Schaltkreises selbst.

Ein typischer Spannungsverlauf, der an die magnetfelderzeugende Vorrichtung eines magnetisch-induktiven Durchflussmessgerätes angelegt wird, weist alternierende Phasen mit unterschiedlichen Stromflussrichtungen bzw. unterschiedlichen Spannungsvorzeichen auf. Während der Messphasen wird eine Hold-Spannung Vhold angelegt. Die Hold-Spannung Vhold wird für eine Hold-Dauer Thold angelegt. Ein üblicher Spannungsverlauf besteht aus alternierenden Rechteckspannungen. Es sind auch Spannungsverläufe bekannt, die zwischen den alternierenden Rechteckspannungen Ruhephasen aufweisen, in denen keine Spannung an die magnetfelderzeugende Vorrichtung angelegt wird.

Vorteilhafte Ausgestaltung der Erfindung sind Gegenstand der Unteransprüche.

Eine Ausgestaltung sieht vor, dass der fünfte Transistor als n-Kanal Transistor ausgebildet ist.

Eine Ausgestaltung sieht vor, dass der integrierte Schaltkreis weiterhin umfasst:
-- einen sechsten Transistor, welcher mit einem Eingang für eine Shot-Spannung Vshot, und insbesondere einem Aufwärtswandler, welcher ebenfalls Teil des integrierten Schaltkreises ist und dazu eingerichtet ist eine Eingangsspannung in die Shot-Spannung Vshot umzuwandeln, elektrisch verbunden ist,
   **wobei** die Ansteuerlogik dazu eingerichtet ist, Steuersignale an den Eingang des sechsten Transistors zu liefern, um eine Shot-Dauer Tshot der Shot-Spannung Vshot und eine Frequenz mit der sich die Shot-Spannung Vshot wiederholt einzustellen.

Herkömmliche Motordriver ICs sind für genau eine konstante Brückenspannung eingerichtet. Nachteilig daran ist, dass somit nur langsame und träge Systeme realisierbar sind.

Um beim Umschalten einen Sollstrom schneller zu erreichen ist es vorteilhaft, wenn vor dem Anlegen der Hold-Spannung eine Shot-Spannung für eine Shot-Dauer angelegt wird. Die Shot-Spannung ist deutlich größer als die Hold-Spannung. Die Hold-Spannung liegt üblicherweise in einem Spannungsbereich von 1 bis 15V, während die Shot-Spannung üblicherweise bei 50 bis 100 V liegen kann.

Das Umschalten von einer Shot-Spannung zu einer Hold-Spannung erfolgt innerhalb weniger Mikrosekunden. Bisher sind noch keine integrierte Schaltkreise bekannt, die diese Anforderung erfüllt.

Der Einsatz von Transistoren an Stelle von Dioden sorgt dafür, dass deutlich geringere EnergieVerluste zu erwarten sind.

Eine Ausgestaltung sieht vor, dass der sechste Transistor als p-Kanal Transistor ausgebildet ist.

Eine Ausgestaltung sieht vor, dass die Vorrichtung weiterhin umfasst:
- einen ersten elektrischen Widerstand, welcher getrennt von dem integrierten Schaltkreis angeordnet ist,
   **wobei** die H-Brücke über einen dritten Knotenpunkt mit dem ersten Widerstand verbunden ist,
   **wobei** der erste Widerstand mit dem fünften Transistor elektrisch verbunden ist,
   **wobei** der integrierte Schaltkreis weiterhin umfasst:
      -- eine erste Messeinheit, welche parallel zum ersten Widerstand geschaltet ist und dazu eingerichtet ist, einen Spannungsabfall an dem ersten Widerstand, insbesondere in Bezug auf einem bereitgestellten Referenzpotential, zu messen und diesen in Form eines Messsignales an einem Ausgang IHigh für den Mikrocontroller bereitzustellen.

Die Trennung des ersten elektrischen Widerstands von dem integrierten Schaltkreis hat den Vorteil, dass zum einen der erste elektrische Widerstand nichtaufwendig in den integrierten Schaltkreis implementiert werden muss und zum anderen, dass somit für jede Anwendung mit abweichenden Arbeitsspannungsbereichen nicht unterschiedliche integrierte Schaltkreise benötigt werden. Stattdessen kann für jedes magnetisch-induktive Durchflussmessgerät ein an den verwendeten Spannungsbereich angepasster erster elektrischer Widerstand eingesetzt werden. Der erste elektrische Widerstand kann demnach auf der Leiterplatte angeordnet sein.

Eine Ausgestaltung sieht vor, dass die Vorrichtung weiterhin umfasst:
- einen zweiten elektrischen Widerstand,
   **wobei** die H-Brücke über einen vierten Knotenpunkt mit dem zweiten elektrischen Widerstand elektrisch verbunden ist, welcher getrennt von dem integrierten Schaltkreis angeordnet ist,
   **wobei** der zweite Widerstand mit einem Referenzpotential elektrisch verbunden ist,
   **wobei** der integrierte Schaltkreis umfasst:
      -- eine zweite Messeinheit, welche dazu eingerichtet ist, eine aktuellen Strom durch den zweiten Widerstand zu messen und diesen in Form eines Messignales an einem Ausgang ILow für den Mikrocontroller bereitzustellen.

Die Trennung des zweiten elektrischen Widerstands von dem integrierten Schaltkreis hat den Vorteil, dass zum einen der zweite elektrische Widerstand nichtaufwendig in den integrierten Schaltkreis implementiert werden muss und zum anderen, dass somit für jede Anwendung mit abweichenden Arbeitsspannungsbereichen nicht unterschiedliche integrierte Schaltkreise benötigt werden. Stattdessen kann für jedes magnetisch-induktive Durchflussmessgerät ein an den verwendeten Spannungsbereich angepasster zweiter elektrischer Widerstand eingesetzt werden. Der zweite elektrische Widerstand kann demnach auf der Leiterplatte angeordnet sein.

Eine Ausgestaltung sieht vor, dass die zweite Messeinheit dazu eingerichtet ist, eine Spannung an einem Ausgang SenseLow zum zweiten Widerstand zu verstärken.

Eine Ausgestaltung sieht vor, dass der integrierte Schaltkreis weiterhin umfasst:
-- einen siebten Transistor, welcher parallel zur H-Brücke geschaltet ist,
   **wobei** die Ansteuerlogik dazu eingerichtet ist, Steuersignale an den Eingang des fünften Transistors zu liefern, um für eine Diagnose der magnetfelderzeugenden Vorrichtung und/oder der H-Brücke, insbesondere des ersten, zweiten, dritten und/oder vierten Transistors die H-Brücke zu überbrücken.

Eine Ausgestaltung sieht vor, dass der integrierte Schaltkreis weiterhin umfasst:
-- einen achten Transistor, welcher mit einem Eingang für ein Referenzpotential elektrisch verbunden ist,
   **wobei** die Ansteuerlogik dazu eingerichtet ist, Steuersignale an den Eingang des achten Transistors zu liefern, um die magnetfelderzeugende Vorrichtung elektrisch auf das Referenzpotential zu setzen.

Eine Ausgestaltung sieht vor, dass die Vorrichtung weiterhin umfasst:
- eine Speichereinheit,
   **wobei** der fünfte und sechste Transistor derart ausgebildet sind, dass im Falle, dass eine aktuelle Spannung an einem den fünften und sechsten Transistor verbindenden Knotenpunkt größer ist als eine aktuelle Spannung am Aufwärtswandler eine Überschussenergie der magnetfelderzeugenden Vorrichtung über den Aufwärtswandler in der Speichereinheit gespeichert wird.

Dafür kann es sich beim sechsten Transistor beispielsweise um einen p-Kanal Transistor handeln, der es erlaubt die Überschussenergie in den Speicher zu leiten. Der fünfte Transistor ist in dem Fall ein n-kanal Transistor, welcher vermeidet, dass die Überschussenergie in den Abwärtswandler übergeht.

Eine Ausgestaltung sieht vor, dass der integrierte Schaltkreis weiterhin umfasst:
-- einen Digital-Analog-Wandler, welcher dazu eingerichtet ist, den Aufwärtswandler und/oder den Abwärtswandler zu steuern.

Eine Ausgestaltung sieht vor, dass die Vorrichtung weiterhin umfasst:
- einen Digital-Analog-Wandler, welcher dazu eingerichtet ist, den Aufwärtswandler und/oder den Abwärtswandler zu steuern,
   **wobei** der Digital-Analog-Wandler getrennt von dem integrierten Schaltkreis angeordnet ist. Eine Ausgestaltung sieht vor, dass der integrierte Schaltkreis weiterhin umfasst:
   -- einen Analog-Digital-Wandler, welcher dazu eingerichtet ist, den gemessenen Spannungsabfall und/oder den gemessenen Strom in ein digitales Messsignal umzuwandeln.

Eine Ausgestaltung sieht vor, dass die Vorrichtung weiterhin umfasst:
-- einen Analog-Digital-Wandler, welcher dazu eingerichtet ist, den gemessenen Spannungsabfall und/oder den gemessenen Strom in ein digitales Messsignal umzuwandeln,
   **wobei** der Analog-Digital-Wandler getrennt von dem integrierten Schaltkreis angeordnet ist. Das erfindungsgemäße magnetisch-induktive Durchflussmessgerät zum Ermitteln einer strömungsgeschwindigkeitsabhängigen Messgröße eines fließfähigen Mediums, umfasst:
   - ein Messrohr zum Führen des Mediums,
   - eine magnetfelderzeugende Vorrichtung zum Erzeugen eines das Messrohr durchdringenden Magnetfeldes;
   - eine Betriebsschaltung zum Betreiben der magnetfelderzeugenden Vorrichtung,
      **wobei** die Betriebsschaltung eine Vorrichtung nach einem der vorherigen Ansprüche umfasst; und
   - eine Vorrichtung zum Erfassen einer induzierten Messspannung im Medium.

Der Kern der Erfindung ist die optimale Integration von elektrischen Funktionsblöcken/-gruppen eines magnetisch-induktiven Durchflussmessgerätes in einem Chip, um somit Kosten zu optimieren. Das Patent DE 10 2016 122 914 B4 weist darauf hin, verschiedene Schaltkreise zu integrieren. Die vorliegende erfinderische Höhe besteht nun aber darin, dies so zu tun, dass es in Bezug auf ein magnetisch-induktives Durchflussmessgerät wirtschaftlich optimiert wird. Dafür wird die Aufteilung der erforderlichen Funktionsblöcke für die Spulenstromregelung optimal zwischen diskreter und integrierter Realisierung gewählt, so dass sich ein wirtschaftlicher Vorteil für das Gesamtsystem ergibt.

Die Erfindung wird anhand der nachfolgenden Figuren näher erläutert. Es zeigt:
**Fig. 1****:** eine Ausgestaltung der erfindungsgemäßen Vorrichtung zum Bereitstellen eines Erregungsstroms an einem magnetisch-induktiven Durchflussmessgerät; und
**Fig. 2****:** ein erfindungsgemäßes magnetisch-induktives Durchflussmessgerät mit einer Vorrichtung zum Bereitstellen des Erregerstromes.

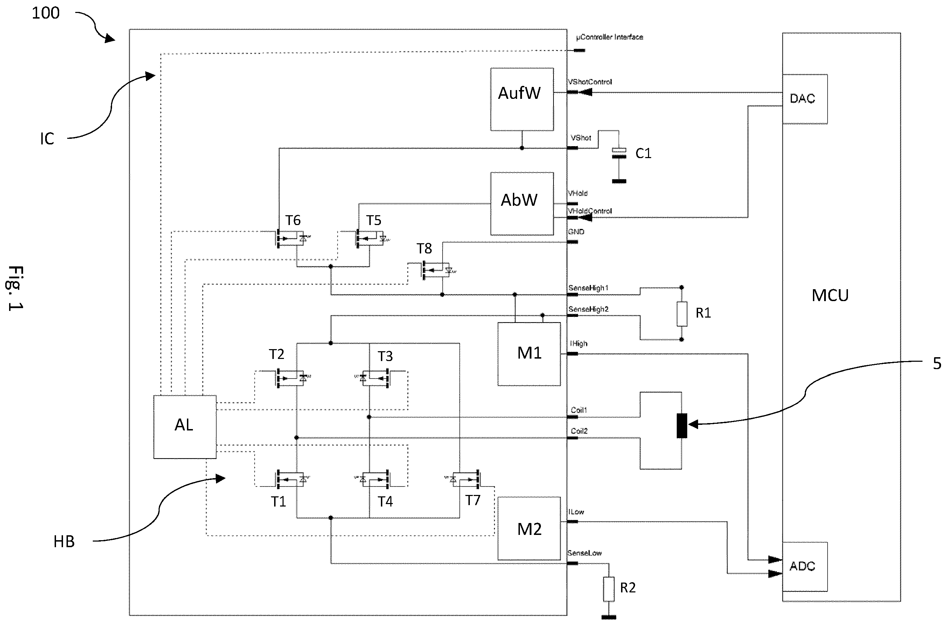

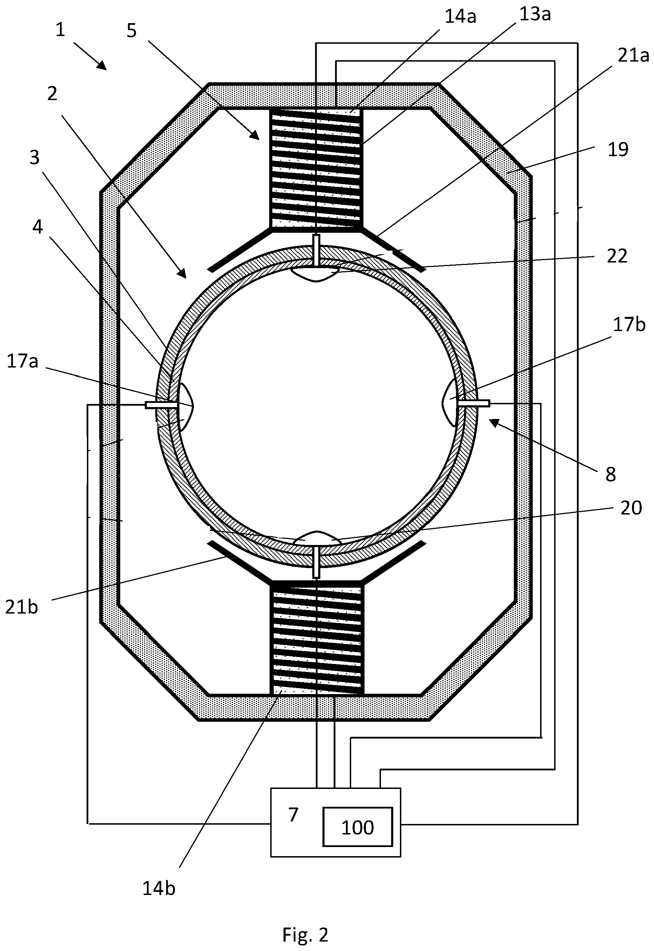

**Fig. 1** zeigt eine Ausgestaltung der erfindungsgemäßen Vorrichtung 100 zum Bereitstellen eines Erregungsstroms an einem magnetisch-induktiven Durchflussmessgerät (siehe **Fig. 2****).** Die Vorrichtung 100 zum Bereitstellen des Erregungsstroms an einem magnetisch-induktiven Durchflussmessgerät umfasst einen integrierten Schaltkreis IC, der auf einer Leiterplatte der Vorrichtung 100 angeordnet und Teil der Betriebsschaltung ist. Der integrierte Schaltkreis IC weist eine H-Brücke HB mit einem ersten, zweiten, dritten und vierten Transistor T1, T2, T3, T4 auf. Der erste Transistor T1 und der zweite Transistor T2 sind in Reihe geschaltet und zusammen parallel zum dritten Transistor T3 und zum vierten Transistor T4, die ebenfalls zueinander in Reihe geschaltet sind. Die H-Brücke HB ist über einen ersten Knotenpunkt mit einem Eingang Coil1 des integrierten Schaltkreises IC und über einen zweiten Knotenpunkt mit einem Ausgang Coil2 des integrierten Schaltkreis IC verbunden. Der Eingang Coil1 und der Ausgang Coil2 sind mit der magnetfelderzeugenden Vorrichtung 5 verbunden und bilden somit die Schnittstelle zwischen Magnetspule und Betriebsschaltung. Der erste Knotenpunkt befindet sich zwischen dem dritten und vierten Transistor T3, T4. Der zweite Knotenpunkt befindet sich zwischen dem ersten und zweiten Transistor T1, T2.

Der integrierte Schaltkreis IC weist zudem eine Ansteuerlogik AL auf, welche dazu eingerichtet ist, Steuersignale an jeweilige Eingänge des ersten, zweiten, dritten und vierten Transistors T1, T2, T3, T4 der H-Brücke HB zu liefern, um die Bereitstellung eines Betriebssignales an die magnetfelderzeugende Vorrichtung 5 durch die H-Brücke HB zu steuern. Bei der Ansteuerlogik AL handelt es sich um eine digitale Logikschaltung mit herkömmlichen Logik Gattern. Die Ansteuerlogik dient dazu zeitkritische Aktionen in der Hardware auszuführen um zu verhindern, dass in den dynamischen Phasen Kurzschlüsse entstehen. Die Aufgabe der Ansteuerlogik wird üblicherweise durch die Software übernommen. Die Ansteuerlogik AL ist dazu eingerichtet, die Transistoren zu steuern, d.h. die Transistoren ein- oder auszuschalten.

Der integrierte Schaltkreis IC weist zudem einen fünften Transistor T5 auf, welcher mit einem Eingang für eine Hold-Spannung Vhold, und insbesondere mit einem Abwärtswandler AbW, welcher ebenfalls Teil des integrierten Schaltkreises IC ist und dazu eingerichtet ist, eine Eingangsspannung in die Hold-Spannung Vhold umzuwandeln, elektrisch verbunden ist. Die Ansteuerlogik AL dazu eingerichtet ist, Steuersignale an den Eingang des fünften Transistors T5 zu liefern, um eine Hold-Dauer Thold der Hold-Spannung Vhold und eine Frequenz mit der sich die Hold-Spannung Vhold wiederholt einzustellen. Der fünfte Transistor T5 als n-Kanal Transistor ausgebildet. Somit wird verhindert, dass eine Überschussenergie, die in der magnetfelderzeugenden Vorrichtung 5 nach dem Umschalten des Magnetfeldes vorliegt in den Abwärtswandler fließt.

Der integrierte Schaltkreis IC umfasst weiterhin einen sechsten Transistor T6, welcher mit einem Eingang für eine Shot-Spannung Vshot, und insbesondere einem Aufwärtswandler AufW, welcher ebenfalls Teil des integrierten Schaltkreises IC ist und dazu eingerichtet ist eine Eingangsspannung in die Shot-Spannung Vshot umzuwandeln, elektrisch verbunden ist. Über den sechsten Transistor wird die Shot-Dauer eingestellt. Dafür ist die Ansteuerlogik AL dazu eingerichtet ist, Steuersignale an den Eingang des sechsten Transistors T6 zu liefern, um eine Shot-Dauer Tshot der Shot-Spannung Vshot und eine Frequenz mit der sich die Shot-Spannung Vshot wiederholt einzustellen. Der sechste Transistor T6 ist als p-Kanal Transistor ausgebildet, um einen Fluss der Überschussenergie in den Speichereinheit C1 zu gewährleisten. Im Falle, dass eine aktuelle Spannung an einem den fünften und sechsten Transistor T5, T6 verbindenden Knotenpunkt größer ist als eine aktuelle Spannung am Aufwärtswandler AufW, wird die Überschussenergie der magnetfelderzeugenden Vorrichtung 5 über den Aufwärtswandler AufW in der Speichereinheit C1 gespeichert. Die gespeicherte Energie kann dann für die Erzeugung der Shot-Spannung Vshot der nächsten Phase eingesetzt werden.

Nicht Teil des integrierten Schaltkreises ist der Mikrocontroller MCU, welcher ebenfalls auf der Leiterplatte angeordnet und dazu eingerichtet ist, das Betriebssignal an den integrierten Schaltkreis IC zu liefern und Messsignale von dem integrierten Schaltkreis IC zu erhalten,
Neben dem Microcontroller MSU ist weiterhin ein erster elektrischer Widerstand R1 vorgesehen, welcher getrennt von dem integrierten Schaltkreis IC angeordnet ist und über einen dritten Knotenpunkt mit der H-Brücke HB elektrisch verbunden ist. Weiterhin ist der erste Widerstand R1 mit dem fünften Transistor T5 elektrisch verbunden (d.h. in Reihe). Der erste Widerstand R1 dient zur Überwachung der magnetfelderzeugenden Vorrichtung 5. Dafür weist der integrierte Schaltkreis eine erste Messeinheit M1, welche parallel zum ersten Widerstand R1 geschaltet ist und dazu eingerichtet ist, einen Spannungsabfall an dem ersten Widerstand R1, insbesondere in Bezug auf einem bereitgestellten Referenzpotential, zu messen und diesen in Form eines Messsignales an einem Ausgang IHigh für den Mikrocontroller MCU bereitzustellen. Anhand des Messsignales wird die Intaktheit der magnetfelderzeugenden Vorrichtung überwacht.

Für die Diagnose der magnetfelderzeugenden Vorrichtung 5 ist zusätzlich ein zweiter elektrischer Widerstand R2 vorgesehen, der auf der Leiterplatte angeordnet und getrennt von dem integrierten Schaltkreis IC ist. Die H-Brücke HB ist über einen vierten Knotenpunkt mit dem zweiten elektrischen Widerstand R2 elektrisch verbunden ist. Weiterhin ist der zweite Widerstand R2 direkt mit einem Referenzpotential (z.B. dem Erdpotential) elektrisch verbunden. Ferner ist die zweite Messeinheit M2 dazu eingerichtet, eine Spannung an einem Ausgang SenseLow zum zweiten Widerstand R2 zu verstärken und diesen Wert an der ILow auszugeben.

Für die Diagnose notwendig ist eine zweite Messeinheit M2, die ebenfalls Teil des integrierten Messkreises IC ist. Die zweite Messeinheit M2 ist dazu eingerichtet, einen aktuellen Strom durch den zweiten Widerstand R2 zu messen und diesen in Form eines Messignales an einem Ausgang ILow für den Mikrocontroller MCU bereitzustellen. Der Microcontroller MCU ist dazu eingerichtet anhand des Messsignales die Intaktheit der magnetfelderzeugenden Vorrichtung zu überwachen bzw. zu bestimmen und optional auszugeben
Der integrierte Schaltkreis IC umfasst weiterhin einen siebten Transistor T7 auf, welcher parallel zur H-Brücke HB geschaltet ist und dazu dient, den Strom um die H-Brücke HB herumzuleiten. Dafür ist die Ansteuerlogik AL dazu eingerichtet, Steuersignale an den Eingang des fünften Transistors T5 zu liefern, um für eine Diagnose der magnetfelderzeugenden Vorrichtung 5 und/oder der H-Brücke HB, insbesondere des ersten, zweiten, dritten und/oder vierten Transistors T1, T2, T3, T4 die H-Brücke HB zu überbrücken.

Der integrierte Schaltkreis IC umfasst weiterhin einen achten Transistor T8, welcher mit einem Eingang für ein Referenzpotential (z.B. für ein Erdpotential) elektrisch verbunden ist, damit die magnetfelderzeugende Vorrichtung auf ein gewünschtes Potential gesetzt werden kann. So kann beispielsweise die magnetfelderzeugende Vorrichtung, insbesondere die Spulen bei Bedarf geerdet werden. Dafür ist die Ansteuerlogik AL dazu eingerichtet, Steuersignale an den Eingang des achten Transistors T5 zu liefern, um die magnetfelderzeugende Vorrichtung elektrisch mit dem Eingang des Referenzpotentials zu verbinden und auf das Referenzpotential zu setzen.

In einer Ausgestaltung (nicht abgebildet) ist ein Digital-Analog-Wandler DAC, welcher dazu eingerichtet ist den Aufwärtswandler AufW und/oder den Abwärtswandler AbW zu steuern, ebenfalls Teil des integrierten Schaltkreises. Zusätzlich weist der integrierte Schaltkreis einen Analog-Digital-Wandler ADC auf, welcher dazu eingerichtet ist, den gemessenen Spannungsabfall und/oder den gemessenen Strom in ein digitales Messsignal umzuwandeln.

Alternativ sind der Digital-Analog-Wandler DAC und der Analog-Digital-Wandler ADC wie abgebildet getrennt von dem integrierten Schaltkreis IC angeordnet und dazu eingerichtet, den Aufwärtswandler AufW und/oder den Abwärtswandler AbW zu steuern bzw. den gemessenen Spannungsabfall und/oder den gemessenen Strom in ein digitales Messsignal umzuwandeln.

Dafür weist der integrierte Schaltkreis IC entsprechende Eingänge VShotControl und VHoldControl auf über die der Digital-Analog-Wandler DAC mit den elektronischen Bauteile der integrierten Schaltkreises kommuniziert. Weiterhin weist der integrierte Schaltkreis IC Ausgänge IHigh und ILow auf, über die ermittelten Messsignale der Spulendiagnose an den der Analog-Digital-Wandler ADC weitergeleitet werden.

**Fig. 2** zeigt ein erfindungsgemäßes magnetisch-induktives Durchflussmessgerät 1 mit einer Vorrichtung 100 zum Bereitstellen des Erregerstromes. Der Aufbau und das Messprinzip eines magnetisch-induktiven Durchflussmessgerätes 1 sind grundsätzlich bekannt. Durch ein Messrohr 2 wird ein fließfähiges Medium geleitet, welches eine elektrische Leitfähigkeit aufweist. Das Messrohr 2 umfasst ein mediumsberührendes Trägerrohr 3, welches üblicherweise aus Stahl, Keramik, Kunststoff oder Glas gebildet ist oder diese zumindest umfassen. Eine magnetfelderzeugende Vorrichtung 5 zum Erzeugen eines Magnetfeldes ist so am Trägerrohr 3 angeordnet, dass sich die Magnetfeldlinien im Wesentlichen senkrecht zu einer durch eine Messrohrachse definierten Längsrichtung orientieren. Die magnetfelderzeugende Vorrichtung 5 umfasst üblicherweise eine Sattelspule oder mindestens eine (Zylinder-)Spule 13i. Durch eine Aufnahme der Spule 13i erstreckt sich üblicherweise ein Spulenkern 14i. Als Aufnahme ist das Volumen zu verstehen, welches durch den die Spule 13i bildenden Spulendraht begrenzt wird. Die Aufnahme der Spule 13i kann somit durch eine Spulenhalterung oder durch das gedachte eingeschlossene Volumen gebildet sein. Letzteres tritt ein, wenn der Spulendraht der Spule 13i direkt um den Spulenkern 14i gewickelt ist. Der Spulenkern 14i ist aus einem magnetisch leitenden, insbesondere weichmagnetischen Werkstoff gebildet. Die Vorrichtung 5 zum Erzeugen des Magnetfeldes umfasst einen Polschuh 21i, der an einem Ende des Spulenkerns 14i angeordnet ist. Der Polschuh 21i kann separates Bauteil sein oder monolithisch mit dem Spulenkern 14i verbunden sein. In der abgebildeten Ausgestaltung der **Fig. 1** weisen zwei diametral angeordnete Spulen 13a, 13b jeweils einen Spulenkern 14a, 14b und einen Polschuh 21a, 21b auf. Die zwei Spulenkerne 14a, 14b sind über eine Feldrückführung 19 miteinander verbunden. Die Feldrückführung 19 verbindet die jeweils voneinander abgewandten Seiten der Spulenkerne 14a, 14b miteinander. Es sind jedoch auch magnetisch-induktive Durchflussmessgeräte mit genau einer Spule 13 mit genau einem Spulenkern 14 und ohne Feldrückführung 19 bekannt. Die Spule 13 ist mit einer Betriebsschaltung 7 verbunden, welche die Spule 13 mit einem Betriebssignal betreibt. Das Betriebssignal kann eine Spannung mit einem zeitlich veränderlichen Verlauf sein und ist durch Betriebssignalparameter charakterisiert, wobei mindestens einer der Betriebssignalparameter regelbar ist. Das durch die magnetfelderzeugende Vorrichtung 5 aufgebaute Magnetfeld wird durch einen mittels einer Betriebsschaltung 7 getakteten Gleichstrom wechselnder Polarität erzeugt. Dies gewährleistet einen stabilen Nullpunkt und macht die Messung unempfindlich gegenüber Einflüssen durch elektrochemische Störungen. Die zwei Spulen 13a, 13b können separat mit der Betriebsschaltung 7 verbunden oder in Reihe bzw. parallel zueinander geschaltet sein.

Bei angelegtem Magnetfeld entsteht im Messrohr 2 eine durchflussabhängige Potenzialverteilung, welche sich beispielsweise in Form einer induzierten Messspannung erfassen lässt. Eine Vorrichtung 8 zum Abgreifen der induzierten Messspannung ist am Messrohr 2 angeordnet. In der abgebildeten Ausgestaltung ist die Vorrichtung 8 zum Abgreifen der induzierten Messspannung durch zwei gegenüberliegend angeordnete Messelektroden 17a, 17b zum Bilden eines galvanischen Kontaktes mit dem Medium gebildet. Es sind jedoch aus magnetisch-induktive Durchflussmessgeräte bekannt, die an der Außenwandung des Trägerrohres 3 angeordnete Messelektroden aufweisen, die nicht mediumsberührend sind. In der Regel sind die Messelektroden 17a, 17b diametral angeordnet und bilden eine Elektrodenachse bzw. werden durch eine Querachse geschnitten, die senkrecht zu den Magnetfeldlinien und der Längsachse des Messrohres 2 verläuft. Es sind aber auch Vorrichtungen 8 zum Abgreifen der induzierten Messspannung bekannt, welche mehr als zwei Messelektroden aufweisen. Anhand der gemessenen Messspannung kann die strömungsgeschwindigkeitsabhängigen Messgröße bestimmt werden. Die strömungsgeschwindigkeitsabhängigen Messgröße umfasst die Durchflussgeschwindigkeit, den Volumendurchfluss und/oder den Massedurchfluss des Mediums. Eine Messschaltung 23 ist dazu eingerichtet, die an den Messelektroden 17a, 17b anliegende, induzierte Messspannung zu erfassen und eine Auswerteschaltung 24 ist dazu ausgebildet, die strömungsgeschwindigkeitsabhängigen Messgröße zu ermitteln. Die Auswerteschaltung 24 kann Teil des Messumformers sein.

Das Trägerrohr 3 ist häufig aus einem elektrisch leitfähigen Material gebildet, wie z.B. Stahl. Um das Ableiten der an der ersten und zweiten Messelektrode 17a, 17b anliegenden Messspannung über das Trägerrohr 3 zu verhindern, wird die Innenwand mit einem isolierenden Material, beispielsweise einem (Kunststoff-) Liner 4 ausgekleidet.

Handelsübliche magnetisch-induktive Durchflussmessgeräte weisen zusätzlich zu den Messelektroden 17a, 17b zwei weitere Elektroden 20, 22 auf. Zum einen dient eine optimalerweise am höchsten Punkt im Messrohr 2 angebrachte Füllstandsüberwachungselektrode 22 dazu, eine Teilbefüllung des Messrohres 2 zu detektieren, und ist dazu eingerichtet diese Information an den Nutzer weiterzuleiten und/oder den Füllstand bei der Ermittlung des Volumendurchflusses zu berücksichtigen. Des Weiteren dient eine Referenzelektrode 20, die üblicherweise diametral zur Füllstandsüberwachungselektrode 22 bzw. am untersten Punkt des Messrohrquerschnittes angebracht ist, dazu, ein kontrolliertes, elektrisches Potenzial im Medium einzustellen. In der Regel wird die Referenzelektrode 20 zum Verbinden des fließenden Mediums mit einem Erdpotenzial eingesetzt.

Die Betriebsschaltung 7, Reglerschaltung, Messschaltung und Auswerteschaltung können Teil einer einzelnen Elektronikschaltung sein, oder einzelne Schaltungen bilden. Die Messschaltung, Betriebsschaltung 7 und/oder Auswerteschaltung ist dazu eingerichtet, das erfindungsgemäße Verfahren auszuführen. Dafür ist die Betriebsschaltung 7 dazu eingerichtet das Betriebssignal zu erzeugen und an der magnetfelderzeugenden Vorrichtung bereitzustellen. Weiterhin ist die Messschaltung dazu eingerichtet die Messspannungswerte zu ermitteln und an die Auswerteschaltung weiterzuleiten. Die Auswerteschaltung ist dazu eingerichtet, den aktuellen Nullpunkt zu ermitteln und für die Bestimmung der strömungsgeschwindigkeitsabhängige Messgröße zu berücksichtigen.

Die Betriebsschaltung 7 weist die erfindungsgemäße Vorrichtung 100 zum Bereitstellen eines Erregungsstroms für die magnetfelderzeugende Vorrichtung auf.

### BEZUGSZEICHENLISTE

magnetisch-induktives Durchflussmessgerät 1
Messrohr 2
Trägerrohr 3
Liner 4
magnetfelderzeugenden Vorrichtung 5
Betriebsschaltung 7
Vorrichtung zum Erfassen einer induzierten Messspannung 8
Spule 13i
Spulenkern 14i
Messelektrode 17i
Feldrückführung 19
Referenzelektrode 20
Polschuh 21i
Füllstandsüberwachungselektrode 22
integrierter Schaltkreis IC
erster bis achter Transistor T1 - T8
H-Brücke HB
Abwärtswandler AbW
Aufwärtswandler AufW
Ansteuerlogik AL
Mikrocontroller MCU
erster elektrischer Widerstand R1
zweiter elektrischer Widerstand R2
erste Messeinheit M1
zweite Messeinheit M2
Speichereinheit C1
Digital-Analog-Wandler DAC
Analog-Digital-Wandler ADC

## Patentansprüche

1. Vorrichtung (100) zum Bereitstellen eines Erregungsstroms an einem magnetisch-induktiven Durchflussmessgerät (1) zum Ermitteln einer strömungsgeschwindigkeitsabhängigen Messgröße eines fließfähigen Mediums, mit einem Messrohr (2), einer magnetfelderzeugenden Vorrichtung (5) und einer Vorrichtung (8) zum Erfassen einer induzierten Messspannung im Medium, umfassend:
- einen integrierten Schaltkreis (IC), umfassend:
-- eine H-Brücke (HB) mit einem ersten, zweiten, dritten und vierten Transistor (T1, T2, T3, T4),
**wobei** die H-Brücke (HB) über einen ersten Knotenpunkt mit einem Eingang (Coil1) und über einen zweiten Knotenpunkt mit einem Ausgang (Coil2) der magnetfelderzeugenden Vorrichtung (5) verbunden ist,
-- eine Ansteuerlogik (AL), welche dazu eingerichtet ist, Steuersignale an jeweilige Eingänge des ersten, zweiten, dritten und vierten Transistors (T1, T2, T3, T4) der H-Brücke (HB) zu liefern, um die Bereitstellung eines Betriebssignales an die magnetfelderzeugende Vorrichtung (5) durch die H-Brücke (HB) zu steuern,
-- einen fünften Transistor (T5), welcher mit einem Eingang für eine Hold-Spannung Vhold, und insbesondere mit einem Abwärtswandler (AbW), welcher ebenfalls Teil des integrierten Schaltkreises (IC) ist und dazu eingerichtet ist, eine Eingangsspannung in die Hold-Spannung Vhold umzuwandeln, elektrisch verbunden ist,
**wobei** die Ansteuerlogik (AL) dazu eingerichtet ist, Steuersignale an den Eingang des fünften Transistors (T5) zu liefern, um eine Hold-Dauer Thold der Hold-Spannung Vhold und eine Frequenz mit der sich die Hold-Spannung Vhold wiederholt einzustellen; und
- einen Mikrocontroller (MCU), welcher dazu eingerichtet ist, das Betriebssignal an den integrierten Schaltkreis (IC) zu liefern und Messsignale von dem integrierten Schaltkreis (IC) zu erhalten,
**wobei** der Mikrocontroller (MCU) von dem integrierten Schaltkreis (IC) getrennt angeordnet ist.

2. Vorrichtung nach Anspruch 1,
**wobei** der fünfte Transistor (T5) als n-Kanal Transistor ausgebildet ist.

3. Vorrichtung nach Anspruch 1 oder 2, **wobei** der integrierten Schaltkreis (IC) weiterhin umfasst:
-- einen sechsten Transistor (T6), welcher mit einem Eingang für eine Shot-Spannung Vshot, und insbesondere einem Aufwärtswandler (AufW), welcher ebenfalls Teil des integrierten Schaltkreises (IC) ist und dazu eingerichtet ist eine Eingangsspannung in die Shot-Spannung Vshot umzuwandeln, elektrisch verbunden ist,
**wobei** die Ansteuerlogik (AL) dazu eingerichtet ist, Steuersignale an den Eingang des sechsten Transistors (T6) zu liefern, um eine Shot-Dauer Tshot der Shot-Spannung Vshot und eine Frequenz mit der sich die Shot-Spannung Vshot wiederholt einzustellen.

4. Vorrichtung nach Anspruch 3,
**wobei** der sechste Transistor (T6) als p-Kanal Transistor ausgebildet ist.

5. Vorrichtung nach einem der vorherigen Ansprüche, umfassend:
- einen ersten elektrischen Widerstand (R1), welcher getrennt von dem integrierten Schaltkreis (IC) angeordnet ist,
**wobei** die H-Brücke (HB) über einen dritten Knotenpunkt mit dem ersten Widerstand (R1) verbunden ist,
**wobei** der erste Widerstand (R1) mit dem fünften Transistor (T5) elektrisch verbunden ist,
**wobei** der integrierte Schaltkreis (IC) weiterhin umfasst:
-- eine erste Messeinheit (M1), welche parallel zum ersten Widerstand (R1) geschaltet ist und dazu eingerichtet ist, einen Spannungsabfall an dem ersten Widerstand (R1), insbesondere in Bezug auf einem bereitgestellten Referenzpotential, zu messen und diesen in Form eines Messsignales an einem Ausgang IHigh für den Mikrocontroller (MCU) bereitzustellen.

6. Vorrichtung nach einem der vorhergehenden Ansprüche, umfassend:
- einen zweiten elektrischen Widerstand (R2),
**wobei** die H-Brücke (HB) über einen vierten Knotenpunkt mit dem zweiten elektrischen Widerstand (R2) elektrisch verbunden ist, welcher getrennt von dem integrierten Schaltkreis (IC) angeordnet ist,
**wobei** der zweite Widerstand (R2) mit einem Referenzpotential elektrisch verbunden ist,
**wobei** der integrierte Schaltkreis (IC) umfasst:
-- eine zweite Messeinheit (M2), welche dazu eingerichtet ist, eine aktuellen Strom durch den zweiten Widerstand (R2) zu messen und diesen in Form eines Messignales an einem Ausgang ILow für den Mikrocontroller (MCU) bereitzustellen.

7. Vorrichtung nach Anspruch 6,
**wobei** die zweite Messeinheit (M2) dazu eingerichtet ist, eine Spannung an einem Ausgang SenseLow zum zweiten Widerstand (R2) zu verstärken.

8. Vorrichtung nach einem der vorhergehenden Ansprüche,
**wobei** der integrierte Schaltkreis (IC) weiterhin umfasst:
-- einen siebten Transistor (T7), welcher parallel zur H-Brücke (HB) geschaltet ist,
**wobei** die Ansteuerlogik (AL) dazu eingerichtet ist, Steuersignale an den Eingang des fünften Transistors (T5) zu liefern, um für eine Diagnose der magnetfelderzeugenden Vorrichtung (5) und/oder der H-Brücke (HB), insbesondere des ersten, zweiten, dritten und/oder vierten Transistors (T1, T2, T3, T4) die H-Brücke (HB) zu überbrücken.

9. Vorrichtung nach einem der vorhergehenden Ansprüche, **wobei** der integrierte Schaltkreis (IC) weiterhin umfasst:
-- einen achten Transistor (T8), welcher mit einem Eingang für ein Referenzpotential elektrisch verbunden ist,
**wobei** die Ansteuerlogik (AL) dazu eingerichtet ist, Steuersignale an den Eingang des achten Transistors (T5) zu liefern, um die magnetfelderzeugende Vorrichtung elektrisch auf das Referenzpotential zu setzen.

10. Vorrichtung nach Anspruch 3 oder 4, umfassend:
- eine Speichereinheit (C1),
**wobei** der fünfte und sechste Transistor (T5, T6) derart ausgebildet sind, dass im Falle, dass eine aktuelle Spannung an einem den fünften und sechsten Transistor (T5, T6) verbindenden Knotenpunkt größer ist als eine aktuelle Spannung am Aufwärtswandler (AufW) eine Überschussenergie der magnetfelderzeugenden Vorrichtung (5) über den Aufwärtswandler (AufW) in der Speichereinheit (C1) gespeichert wird.

11. Vorrichtung nach einem der vorhergehenden Ansprüche, **wobei** der integrierte Schaltkreis (IC) weiterhin umfasst:
-- einen Digital-Analog-Wandler (DAC), welcher dazu eingerichtet ist den Aufwärtswandler (AufW) und/oder den Abwärtswandler (AbW) zu steuern.

12. Vorrichtung nach einem der Ansprüche 1 bis 10, weiterhin umfassend:
- einen Digital-Analog-Wandler (DAC), welcher dazu eingerichtet ist, den Aufwärtswandler (AufW) und/oder den Abwärtswandler (AbW) zu steuern,
**wobei** der Digital-Analog-Wandler (DAC) getrennt von dem integrierten Schaltkreis (IC) angeordnet ist.

13. Vorrichtung nach einem der vorhergehenden Ansprüche, **wobei** der integrierte Schaltkreis (IC)
weiterhin umfasst:
-- einen Analog-Digital-Wandler (ADC), welcher dazu eingerichtet ist, den gemessenen Spannungsabfall und/oder den gemessenen Strom in ein digitales Messsignal umzuwandeln.

14. Vorrichtung nach einem der Ansprüche 1 bis 12, weiterhin umfassend:
-- einen Analog-Digital-Wandler (ADC), welcher dazu eingerichtet ist, den gemessenen Spannungsabfall und/oder den gemessenen Strom in ein digitales Messsignal umzuwandeln,
**wobei** der Analog-Digital-Wandler (ADC) getrennt von dem integrierten Schaltkreis (IC) angeordnet ist.

15. Magnetisch-induktives Durchflussmessgerät zum Ermitteln einer strömungsgeschwindigkeitsabhängigen Messgröße eines fließfähigen Mediums, umfassend:
- ein Messrohr (2) zum Führen des Mediums,
- eine magnetfelderzeugende Vorrichtung (5) zum Erzeugen eines das Messrohr (2) durchdringenden Magnetfeldes;
- eine Betriebsschaltung (7) zum Betreiben der magnetfelderzeugenden Vorrichtung (5),
**wobei** die Betriebsschaltung (7) eine Vorrichtung nach einem der vorherigen Ansprüche umfasst; und
- eine Vorrichtung (8) zum Erfassen einer induzierten Messspannung im Medium.

## Claims

1. A device (100) for supplying an excitation current to an electromagnetic flowmeter (1) for determining a flow-velocity-dependent measured variable of a flowable medium, the flowmeter comprising a measuring tube (2), a magnetic-field-generating device (5), and a device (8) for detecting an induced measurement voltage in the medium, the device comprising:
• an integrated circuit (IC), comprising:
∘ an H-bridge (HB) having a first, second, third, and fourth transistor (T1, T2, T3, T4),
wherein the H-bridge (HB) is connected via a first node to an input (Coil1) and via a second node to an output (Coil2) of the magnetic-field-generating device (5),
• a control logic (AL) configured to provide control signals to respective inputs of the first, second, third, and fourth transistors (T1, T2, T3, T4) of the H-bridge (HB) in order to control the provision of an operating signal to the magnetic-field-generating device (5) by means of the H-bridge (HB),
• a fifth transistor (T5), electrically connected to an input for a hold voltage Vhold and, in particular, to a buck converter (AbW), which is likewise part of the integrated circuit (IC) and is configured to convert an input voltage into the hold voltage Vhold,
wherein the control logic (AL) is configured to provide control signals to the input of the fifth transistor (T5) in order to set a hold duration Thold of the hold voltage Vhold and a frequency at which the hold voltage Vhold is repeated; and
• a microcontroller (MCU) configured to provide the operating signal to the integrated circuit (IC) and to receive measurement signals from the integrated circuit (IC),
wherein the microcontroller (MCU) is arranged separately from the integrated circuit (IC).

2. The device according to claim 1,
wherein the fifth transistor (T5) is configured as an n-channel transistor.

3. The device according to claim 1 or 2,
wherein the integrated circuit (IC) further comprises:
• a sixth transistor (T6), electrically connected to an input for a shot voltage Vshot and, in particular, to a boost converter (AufW), which is likewise part of the integrated circuit (IC) and is configured to convert an input voltage into the shot voltage Vshot,
wherein the control logic (AL) is configured to provide control signals to the input of the sixth transistor (T6) in order to set a shot duration Tshot of the shot voltage Vshot and a frequency at which the shot voltage Vshot is repeated.

4. The device according to claim 3,
wherein the sixth transistor (T6) is configured as a p-channel transistor.

5. The device according to any one of the preceding claims, comprising:
• a first electrical resistor (R1), arranged separately from the integrated circuit (IC),
wherein the H-bridge (HB) is connected via a third node to the first resistor (R1),
wherein the first resistor (R1) is electrically connected to the fifth transistor (T5),
wherein the integrated circuit (IC) further comprises:
• a first measuring unit (M1), connected in parallel with the first resistor (R1) and configured to measure a voltage drop across the first resistor (R1), in particular with respect to a provided reference potential, and to provide the measured voltage drop as a measurement signal at an output IHigh for the microcontroller (MCU).

6. The device according to any one of the preceding claims, comprising:
• a second electrical resistor (R2),
wherein the H-bridge (HB) is electrically connected via a fourth node to the second electrical resistor (R2), which is arranged separately from the integrated circuit (IC),
wherein the second resistor (R2) is electrically connected to a reference potential,
wherein the integrated circuit (IC) comprises:
• a second measuring unit (M2) configured to measure a current flowing through the second resistor (R2) and to provide the measured current as a measurement signal at an output ILow for the microcontroller (MCU).

7. The device according to claim 6,
wherein the second measuring unit (M2) is configured to amplify a voltage at an output SenseLow connected to the second resistor (R2).

8. The device according to any one of the preceding claims,
wherein the integrated circuit (IC) further comprises:
• a seventh transistor (T7), connected in parallel with the H-bridge (HB),
wherein the control logic (AL) is configured to provide control signals to the input of the seventh transistor (T7) in order to bypass the H-bridge (HB) for diagnosis of the magnetic-field-generating device (5) and/or of the H-bridge (HB), in particular of the first, second, third and/or fourth transistors (T1, T2, T3, T4).

9. The device according to any one of the preceding claims,
wherein the integrated circuit (IC) further comprises:
• an eighth transistor (T8), electrically connected to an input for a reference potential,
wherein the control logic (AL) is configured to provide control signals to the input of the eighth transistor (T8) in order to electrically set the magnetic-field-generating device to the reference potential.

10. The device according to claim 3 or 4, comprising:
• a storage unit (C1),
wherein the fifth and sixth transistors (T5, T6) are configured such that, in the event that a current voltage at a node connecting the fifth and sixth transistors (T5, T6) is greater than a current voltage at the boost converter (AufW), excess energy of the magnetic-field-generating device (5) is stored in the storage unit (C1) via the boost converter (AufW).

11. The device according to any one of the preceding claims,
wherein the integrated circuit further comprises:
• a digital-to-analog converter (DAC) configured to control the boost converter (AufW) and/or the buck converter (AbW).

12. The device according to any one of claims 1 to 10, further comprising:
• a digital-to-analog converter (DAC) configured to control the boost converter (AufW) and/or the buck converter (AbW),
wherein the digital-to-analog converter (DAC) is arranged separately from the integrated circuit (IC).

13. The device according to any one of the preceding claims,
wherein the integrated circuit further comprises:
• an analog-to-digital converter (ADC) configured to convert the measured voltage drop and/or the measured current into a digital measurement signal.

14. The device according to any one of claims 1 to 12, further comprising:
• an analog-to-digital converter (ADC) configured to convert the measured voltage drop and/or the measured current into a digital measurement signal,
wherein the analog-to-digital converter (ADC) is arranged separately from the integrated circuit (IC).

15. An electromagnetic flowmeter for determining a flow-velocity-dependent measured variable of a flowable medium, comprising:
• a measuring tube (2) for conducting the medium;
• a magnetic-field-generating device (5) for generating a magnetic field passing through the measuring tube (2);
• an operating circuit (7) for operating the magnetic-field-generating device (5),
wherein the operating circuit (7) comprises a device according to any one of the preceding claims; and
• a device (8) for detecting an induced measurement voltage in the medium.

## Revendications

1. Dispositif (100) destiné à fournir un courant d'excitation à un débitmètre électromagnétique (1) destiné à déterminer une grandeur de mesure dépendant de la vitesse d'écoulement d'un fluide, comprenant un tube de mesure (2), un dispositif de génération de champ magnétique (5) et un dispositif (8) de détection d'une tension de mesure induite dans le fluide, comprenant :
• un circuit intégré (IC), comprenant :
∘ un pont en H (HB) comportant un premier, un deuxième, un troisième et un quatrième transistor (T1, T2, T3, T4),
le pont en H (HB) étant relié, par un premier nœud, à une entrée (Coil1) et, par un deuxième nœud, à une sortie (Coil2) du dispositif de génération de champ magnétique (5),
• une logique de commande (AL) configurée pour fournir des signaux de commande à des entrées respectives du premier, du deuxième, du troisième et du quatrième transistor (T1, T2, T3, T4) du pont en H (HB) afin de commander la fourniture d'un signal de fonctionnement au dispositif de génération de champ magnétique (5) par le pont en H (HB),
• un cinquième transistor (T5), relié électriquement à une entrée destinée à une tension de maintien Vhold et, notamment, à un convertisseur abaisseur (AbW), qui fait également partie du circuit intégré (IC) et qui est configuré pour convertir une tension d'entrée en la tension de maintien Vhold,
la logique de commande (AL) étant configurée pour fournir des signaux de commande à l'entrée du cinquième transistor (T5) afin de définir une durée de maintien Thold de la tension de maintien Vhold ainsi qu'une fréquence de répétition de cette tension Vhold ; et
• un microcontrôleur (MCU) configuré pour fournir le signal de fonctionnement au circuit intégré (IC) et pour recevoir des signaux de mesure provenant du circuit intégré (IC),
le microcontrôleur (MCU) étant disposé séparément du circuit intégré (IC).

2. Dispositif selon la revendication 1,
dans lequel le cinquième transistor (T5) est réalisé sous la forme d'un transistor à canal N.

3. Dispositif selon la revendication 1 ou 2,
dans lequel le circuit intégré (IC) comprend en outre :
• un sixième transistor (T6), relié électriquement à une entrée destinée à une tension de crête Vshot et, notamment, à un convertisseur élévateur (AufW), qui fait également partie du circuit intégré (IC) et qui est configuré pour convertir une tension d'entrée en la tension de crête Vshot,
la logique de commande (AL) étant configurée pour fournir des signaux de commande à l'entrée du sixième transistor (T6) afin de définir une durée de crête Tshot de la tension de crête Vshot ainsi qu'une fréquence de répétition de cette tension Vshot.

4. Dispositif selon la revendication 3,
dans lequel le sixième transistor (T6) est réalisé sous la forme d'un transistor à canal P.

5. Dispositif selon l'une quelconque des revendications précédentes, comprenant :
• une première résistance électrique (R1) disposée séparément du circuit intégré (IC),
le pont en H (HB) étant relié, par un troisième nœud, à la première résistance (R1),
la première résistance (R1) étant reliée électriquement au cinquième transistor (T5),
le circuit intégré (IC) comprenant en outre :
• une première unité de mesure (M1), montée en parallèle de la première résistance (R1) et configurée pour mesurer une chute de tension aux bornes de la première résistance (R1), notamment par rapport à un potentiel de référence fourni, et pour fournir cette chute de tension sous la forme d'un signal de mesure à une sortie IHigh destinée au microcontrôleur (MCU).

6. Dispositif selon l'une quelconque des revendications précédentes, comprenant :
• une deuxième résistance électrique (R2),
le pont en H (HB) étant relié électriquement, par un quatrième nœud, à la deuxième résistance électrique (R2), laquelle est disposée séparément du circuit intégré (IC),
la deuxième résistance (R2) étant reliée électriquement à un potentiel de référence,
le circuit intégré (IC) comprenant :
• une deuxième unité de mesure (M2) configurée pour mesurer un courant traversant la deuxième résistance (R2) et pour fournir ce courant mesuré sous la forme d'un signal de mesure à une sortie ILow destinée au microcontrôleur (MCU).

7. Dispositif selon la revendication 6,
dans lequel la deuxième unité de mesure (M2) est configurée pour amplifier une tension présente à une sortie SenseLow reliée à la deuxième résistance (R2).

8. Dispositif selon l'une quelconque des revendications précédentes,
dans lequel le circuit intégré (IC) comprend en outre :
• un septième transistor (T7) monté en parallèle du pont en H (HB),
la logique de commande (AL) étant configurée pour fournir des signaux de commande à l'entrée du septième transistor (T7) afin de contourner le pont en H (HB) pour le diagnostic du dispositif de génération de champ magnétique (5) et/ou du pont en H (HB), notamment du premier, du deuxième, du troisième et/ou du quatrième transistor (T1, T2, T3, T4).

9. Dispositif selon l'une quelconque des revendications précédentes,
dans lequel le circuit intégré (IC) comprend en outre :
• un huitième transistor (T8) relié électriquement à une entrée destinée à un potentiel de référence,
la logique de commande (AL) étant configurée pour fournir des signaux de commande à l'entrée du huitième transistor (T8) afin de mettre électriquement le dispositif de génération de champ magnétique au potentiel de référence.

10. Dispositif selon la revendication 3 ou 4, comprenant :
• une unité de stockage (C1),
dans lequel les cinquième et sixième transistors (T5, T6) sont configurés de telle sorte que, lorsqu'une tension instantanée à un nœud reliant les cinquième et sixième transistors (T5, T6) est supérieure à une tension instantanée au niveau du convertisseur élévateur (AufW), une énergie excédentaire du dispositif de génération de champ magnétique (5) est stockée dans l'unité de stockage (C1) par l'intermédiaire du convertisseur élévateur (AufW).

11. Dispositif selon l'une quelconque des revendications précédentes,
dans lequel le circuit intégré comprend en outre :
• un convertisseur numérique-analogique (DAC) configuré pour commander le convertisseur élévateur (AufW) et/ou le convertisseur abaisseur (AbW).

12. Dispositif selon l'une quelconque des revendications 1 à 10, comprenant en outre :
• un convertisseur numérique-analogique (DAC) configuré pour commander le convertisseur élévateur (AufW) et/ou le convertisseur abaisseur (AbW),
le convertisseur numérique-analogique (DAC) étant disposé séparément du circuit intégré (IC).

13. Dispositif selon l'une quelconque des revendications précédentes,
dans lequel le circuit intégré comprend en outre :
• un convertisseur analogique-numérique (ADC) configuré pour convertir la chute de tension mesurée et/ou le courant mesuré en un signal de mesure numérique.

14. Dispositif selon l'une quelconque des revendications 1 à 12, comprenant en outre :
• un convertisseur analogique-numérique (ADC) configuré pour convertir la chute de tension mesurée et/ou le courant mesuré en un signal de mesure numérique,
le convertisseur analogique-numérique (ADC) étant disposé séparément du circuit intégré (IC).

15. Débitmètre électromagnétique destiné à déterminer une grandeur de mesure dépendant de la vitesse d'écoulement d'un fluide, comprenant :
• un tube de mesure (2) destiné à guider le fluide ;
• un dispositif de génération de champ magnétique (5) destiné à générer un champ magnétique traversant le tube de mesure (2) ;
• un circuit de commande (7) destiné à commander le dispositif de génération de champ magnétique (5),
le circuit de commande (7) comprenant un dispositif selon l'une quelconque des revendications précédentes ; et
• un dispositif (8) de détection d'une tension de mesure induite dans le fluide.
